# EUROPÄISCHE PATENTSCHRIFT

(11) **EP 1 194 473 B1**
(45) Veröffentlichungstag und Bekanntmachung des Hinweises auf die Patenterteilung: **23.04.2003**
(21) Anmeldenummer: 00935168.5
(22) Anmeldetag: 05.06.2000
(51) Int. Cl.: C08G 69/20

(54) **VERFAHREN ZUR HERSTELLUNG VON POLYAMIDEN AUS LACTAMEN UND POLYAMID-EXTRAKTEN**
METHOD FOR PREPARING POLYAMIDES FROM LACTAMS AND POLYAMIDE EXTRACTS
PROCEDE DE PRODUCTION DE POLYAMIDES A PARTIR DE LACTAMES ET D'EXTRAITS DE POLYAMIDE

(30) Priorität: 07.06.1999 DE 19925906
(43) Veröffentlichungstag der Anmeldung: 10.04.2002
(73) Patentinhaber: BASF AKTIENGESELLSCHAFT, 67056 Ludwigshafen (DE)
(72) Erfinder: MOHRSCHLADT, Ralf, D-68723 Schwetzingen (DE); HILDEBRANDT, Volker, D-68169 Mannheim (DE); LUDWIG, Alfons, D-37671 Höxter (DE)
(74) Vertreter: Isenbruck, Günter, Dr.
(86) Internationale Anmeldenummer: EP0005121
(87) Internationale Veröffentlichungsnummer: WO00075216

(56) Entgegenhaltungen:
- WO-A-99/43735
- DE-A- 2 554 788

## Beschreibung

Die vorliegende Erfindung betrifft ein Verfahren zur Herstellung von Polyamiden durch Umsetzung von Gemischen aus mindestens einem Lactam und dem Extrakt. der bei der Extraktion von Polyamiden anfällt, unter polyamidbildenden Bedingungen.

Polyamid, das zum größten Teil durch Polymerisation von Caprolactam hergestellt wird, enthält je nach Temperatur im Gleichgewicht 8 bis 15% Caprolactam und dessen Oligomere. Diese stören die weitere Verarbeitung und werden daher meist nach der Granulierung durch Extraktion mit Wasser, caprolactamhaltigem Wasser oder Alkohol oder durch Behandlung mit Inertgasen oder durch Vakuumbehandlung entfernt.

Bei der Extraktion mit Wasser fällt üblicherweise ein Extraktwasser mit etwa 2 bis 15 Gew.-% Caprolactam und dessen Oligomeren an, das aus Gründen der Kostenersparnis und des Umweltschutzes aufgearbeitet wird, wobei man das Caprolactam und dessen Oligomere wieder in die Polymerisation zurückführt.

In der DE-A-43 21 683 und US 4,049,638 sind Verfahren zur Polycaprolactamherstellung beschrieben, die den Einsatz von Caprolactam mit bis zu 15 % Wassergehalt in der Polymerisation erlauben. Die EP-A-0 745 631 offenbart die Wiederverwendung von wäßrigen Extraktlösungen unter Zusatz geringer Mengen einer Di- oder Polycarbonsäure, da sonst der Extrakt langsamer polymerisiert als Caprolactam.

Da der Extrakt auch erhebliche Anteile an cyclischen Oligomeren enthält. die bei der Polymerisation unverändert bleiben, wurden verschiedene Verfahren zur Spaltung dieser Oligomere beziehungsweise Überführung in lineare Oligomere vorgeschlagen. Die Oligomere werden üblicherweise mit Phosphorsäure oder durch Einsatz hoher Temperaturen gespalten. So beschreibt die US 5,077,381 ein Verfahren zur Spaltung der Oligomere bei Temperaturen von 220°C bis 290°C, vorzugsweise unter erhöhtem Druck.

Vor der Rückführung in die Polymerisation muß die üblicherweise etwa 10 Gew.-%ige Extraktlösung zunächst aufgearbeitet, d.h. in der Regel aufkonzentriert werden. Die Aufarbeitung erfolgt normalerweise durch Abdestillieren des Wassers. Die DE-A-25 01 348 beschreibt die Aufkonzentrierung unter Ausschluß von Luftsauerstoff, wobei vor der Aufkonzentrierung auf mehr als 70 Gew.-% dem Extraktwasser frisches Caprolactam zugesetzt wird. Die EP-A-0 123 881 offenbart den Zusatz von Caprolactam zu der Extraktlösung vor Beginn der Aufkonzentrierung, wodurch ein Ausfallen von Oligomeren vermindert wird.

Bei der Anwendung der oben genannten Verfahren zur Extraktwasserrückführung ergibt sich jedoch ein schwerwiegender Nachteil: Die kontinuierliche Rückführung des Extraktwassers bedingt einen starken Konzentrationsanstieg der Oligomere und der thermodynamisch stabilen cyclischen Dimere nicht nur im Reaktionsgemisch, sondern auch im Polymer, wenn im Zuge der kontinuierlichen hydrolytischen Lactampolymerisation die Aufspaltung der Oligomere nicht gelingt beziehungsweise die Einstellung der chemischen Gleichgewichte zu langsam ist. Zudem ist der Anstieg der Oligomerkonzentration dann besonders hoch, wenn das Reaktionsgemisch - beispielsweise zur Herstellung von Polyamiden mit hohem Molekulargewicht - einen geringen Wassergehalt aufweist.

Der Erfindung liegt die Aufgabe zugrunde, ein Verfahren zur Herstellung von Polyamid bereitzustellen, welches die Weiterverarbeitung beziehungsweise die Rückführung des Extraktwassers aus der Extraktion von Polyamiden ermöglicht, wobei die Aufspaltung von Lactam-Dimeren und höheren Oligomeren und die Einstellung der chemischen Gleichgewichte während der Schmelzepolymerisation beschleunigt wird und Polyamide mit verringertem Gesamtextrakt und insbesondere reduziertem Dimer- und Oligomergehalt hergestellt werden können.

Die Aufgabe wird erfindungsgemäß gelöst durch ein Verfahren zur Herstellung von Polyamiden durch Umsetzung mindestens eines Lactams mit wässrigen Monomer- und Oligomerextrakten, und gegebenenfalls weiteren polyamidbildenden Monomeren die bei der Herstellung von Polyamiden während der Extraktion des Polymerisats mit Wassers anfallen, wobei der Wassergehalt des Reaktionsgemisches 0,5 bis 13 Gew.-% beträgt, die Umsetzung in Gegenwart von Metalloxiden, Beta-Zeolithen, Schichtsilikaten oder Kieselgelen, die dotiert sein können, als Heterogenkatalysatoren durchgeführt wird, und wobei die Heterogenkatalysatoren in einer Form eingesetzt werden, die die mechanische Abtrennung aus dem Reaktionsgemisch erlaubt, und im Verlauf oder nach Ende der Polymerisation aus dem Reaktionsgemisch entfernt werden.

Vorzugsweise erfolgt die Polymerisation in mindestens 2 Stufen, wobei in der ersten Stufe unter einem erhöhten Druck gearbeitet wird, bei dem das Reaktionsgemisch mit Ausnahme des Heterogenkatalysators einphasig-flüssig vorliegt, und in der zweiten Stufe unter einem Druck im Bereich von 0,1 mbar bis 1,5 bar nachkondensiert wird, wobei der Heterogenkatalysator in der ersten oder beiden Stufen vorliegen kann.

Vorzugsweise wird die Umsetzung in der ersten Stufe bei einer Temperatur im Bereich von 170°C bis 310°C und einem Druck im Bereich von 5 bis 40 bar durchgeführt. Dabei wird in der zweiten Stufe vorzugsweise adiabatisch entspannt, wobei Wasser und gegebenenfalls Lactammonomere und -oligomere durch Flashverdampfung ausgetragen werden.

Gegenstand der vorliegenden Erfindung ist daher ein Verfahren zur Herstellung von Polyamiden aus mindestens einem Lactam, insbesondere Caprolactam, und gegebenenfalls weiteren Monomeren und gegebenenfalls üblichen Zusatz- und Füllstoffen, wobei das Verfahren dadurch gekennzeichnet ist. daß man ein Reaktionsgemisch, bestehend aus Extraktwasser aus der Extraktion von Polyamid und frischem Lactam, mit einem Wassergehalt von 0,5 bis 13 Gew.-% in Gegenwart eines heterogenen Metalloxidkatalysators unter polyamidbildenden Bedingungen umsetzt. Das erfindungsgemäße Verfahren ermöglicht die Herstellung von Polyamiden, die einen im Vergleich zum Stand der Technik deutlich verringerten Extraktgehalt und insbesondere reduzierten Gehalt an Dimeren und höheren Oligomeren aufweisen. Vorteilhaft ist die Erfindung inbesondere dann, wenn das Reaktionsgemisch einen geringen Wassergehalt aufweist, so daß die (katalysatorfreie) Oligomerenspaltung besonders langsam abläuft.

Die bei der Polyamidextraktion anfallenden Extraktwässer besitzen im allgemeinen einen Gehalt an organischen und gegebenenfalls anorganischen Bestandteilen von 4 bis 15 Gew.-%. Um in die Polymerisation zurückgeführt werden zu können, müssen diese Extraktwässer zunächst eingedampft werden. Dies erfolgt in an sich bekannter Weise in einer ein- oder mehrstufigen Eindampfanlage mit kurzer Verweilzeit, beispielsweise in einem Robertverdampfer, Fallfilmverdampfer, Dünnschichtverdampfer oder Umlaufverdampfer. Das Eindampfen erfolgt bis zu einem Extraktgehalt von höchstens 85 Gew.-%, weil bei dieser Konzentration noch keine Ausfällungen der gelösten Bestandteile zu beobachten sind. Vorzugsweise dampft man auf einen Extraktgehalt von 60 bis 85 Gew.-%, insbesondere 70 bis 85 Gew.-%, ein. Die Eindampftemperaturen liegen dabei im allgemeinen im Bereich von 103°C bis 115°C, vorzugsweise 107°C bis 112°C (bei Normaldruck). Im allgemeinen wird das Eindampfen kontinuierlich durchgeführt.

Besonders bevorzugt wird dem Extraktwasser bereits vor der Aufkonzentrierung frisches Lactam zugesetzt, insbesondere dann, wenn die Extraktion des Polyamids nicht mit caprolactamhaltigem Wasser durchgeführt wurde. Dies hat den Vorteil, dass das Extraktkonzentrat schon während der Aufkonzentrierung gegen Oligomerenausscheidungen stabilisiert ist. Das Gewichtsverhältnis von zugesetztem Caprolactam zu Extraktgehalt wird dabei im Bereich von 0,1 bis 1,5, vorzugsweise 0,5 bis 1, gewählt.

Das nach der Aufkonzentrierung erhaltene Konzentrat (Extraktlösung) hat im allgemeinen eine Temperatur von 107°C bis 112°C und wird anschließend mit dem zur Polymerisation vorgesehenen Lactam vermischt. Man verwendet soviel Lactam, dass das resultierende Gemisch einen Wassergehalt von 0,5 bis 13 Gew.-%, vorzugsweise 0,5 bis 10 Gew.-%, besonders bevorzugt 0,6 bis 7 Gew.-%, insbesondere 1 bis 4 Gew.-% und besonders bevorzugt 1,9 bis 3,5 Gew.-% aufweist. Um diesen Wassergehalt einzustellen, wird das Konzentrat mit dem Lactam im allgemeinen im Gewichtsverhältnis von 1:1 bis 1:12. vorzugsweise 1:1 bis 1:10 und insbesondere 1:1 bis 1:8, vermischt. Der hohe Lactamgehalt (im allgemeinen im Bereich von 79 bis 95 Gew.-%) verbessert die Löslichkeit der in dem Gemisch enthaltenen Oligomere, so dass keine Ausfällungen zu beobachten sind. Das Gemisch ist daher stabil und kann zumindest mehrere Stunden bis zur Weiterverarbeitung gelagert werden, ohne dass Verstopfungen in den Anlagenteilen zu beobachten sind.

Das Gemisch wird dann der Polymerisation, die in Gegenwart von metalloxidhaltigen heterogenen Katalysatoren abläuft, zugeführt. Die Polymerisation wird im allgemeinen kontinuierlich und im wesentlichen nach den in der DE-A-43 21 683und DE-A-197 09 390 beschriebenen Verfahren durchgeführt, wobei in mindestens einer der Reaktionsstufen beziehungsweise -zonen Festbetten aus Metalloxiden eingesetzt werden. Bevorzugt wird der Katalysator beziehungsweise die Mischung verschiedener heterogener Katalysatoren in den Reaktionszonen, in denen das Reaktionsgemisch einphasig-flüssig vorliegt, eingesetzt.

Erfindungsgemäß können als Katalysatoren zur heterogenen Katalyse bekannte Metalloxide, wie Zirkonoxid, Aluminiumoxid, Magnesiumoxid, Ceroxid, Lanthanoxid und bevorzugt Titandioxide wie auch Beta-Zeolithe und Schichtsilikate zur heterogenen Katalyse eingesetzt werden. Besonders bevorzugt ist Titandioxid in der sogenannten Anatas-Modifikation. Vorzugsweise liegt das Titandioxid zu mindestens 70 Gew.-%, besonders bevorzugt mindestens 90 %, insbesondere im wesentlichen vollständig in der Anatas-Modifikation vor. Des weiteren wurde gefunden, daß auch Kieselgel, Zeolithe und dotierte Metalloxide, wobei zum Beispiel Ruthenium, Kupfer oder Fluorid zur Dotierung eingesetzt werden, die Umsetzung der genannten Edukte deutlich verbessern. Geeignete Katalysatoren zeichnen sich insbesondere dadurch aus, dass sie leicht Brönstedsauer sind und eine große spezifische Oberfläche besitzen. Erfindungsgemäß weist der heterogene Katalysator eine makroskopische Form auf, die eine mechanische Abtrennung der Polymerschmelze vom Katalysator, beispielsweise durch Siebe oder Filter, ermöglicht. Vorgeschlagen wird der Katalysator-Einsatz in Form von Strängen, Festbetten, Granulaten oder mit Katalysator beschichteten Füllkörpem oder Einbauten.

In der ersten Reaktionszone, die erfindungsgemäß die/den Katalysator(en) enthält, wird vorzugsweise unter solchen Bedingungen polymerisiert, bei denen das Gemisch einphasig-flüssig vorliegt, d.h. bei erhöhter Temperatur und erhöhtem Druck. Im allgemeinen arbeitet man bei einer Temperatur im Bereich von 170°C bis 310°C, vorzugsweise von 175°C bis 270°C und besonders bevorzugt von 180°C bis 230°C, und bei einem Druck im Bereich von 5 bis 40 bar, vorzugsweise von 12 bis 20 bar.

Um jedoch hochmolekulares Polyamid zu erhalten, soll der Wassergehalt beträchtlich verringert werden. Dies erfolgt vorzugsweise durch adiabatische Entspannung des Polymerisationsgemisches, vorzugsweise auf einen Druck im Bereich von 0,1 mbar bis 1,5 bar, insbesondere 1 mbar bis 1.3 bar und besonders bevorzugt Atmosphärendruck. Aufgrund der adiabatischen Entbindung beziehungsweise Verdampfung des Wassers können sich keine Oligomere oder Additive auf Apparaturteilen abscheiden. Sie verbleiben vielmehr in der Polymermatrix gelöst oder suspendiert, so dass ein reibungsloser Ablauf der Polymerisation gewährleistet ist.

Gemäß einer ersten bevorzugten Ausführungsform wird das zu polymerisierende Gemisch in Gegenwart der heterogenen Katalysatoren in einer ersten Reaktionszone auf eine Temperatur im Bereich von 170°C bis 310°C und einen Druck im Bereich von 5 bis 40 bar gebracht, so dass die Polymerisation einsetzt. Nachdem die gewünschte Temperatur und der gewünschte Druck erreicht sind, wird mindestens eine adiabatische Entspannung (wie nachstehend noch näher beschrieben) durchgeführt. Das nach dem Entspannen erhaltene Produkt unterwirft man in mindestens einer Reaktionszone. die gewünschtenfalls ebenfalls heterogene Katalysatoren enthält, einer drucklosen Nachpolymerisation oder gegebenenfalls einer Nachpolymerisation unter vermindertem Druck, gemäß bekannten Verfahren.

In einer anderen bevorzugten Ausführungsform wird das nach dem Entspannen erhaltene Produkt jedoch in einer ersten Reaktionszone bei einer Temperatur im Bereich von 170°C bis 310°C und einem Druck im Bereich von 5 bis 40 bar weiterpolymerisiert. anschließend erfolgt eine erneute adiabatische Entspannung und schließlich wird in einer zweiten Reaktionszone wie oben beschrieben nachpolymerisiert. Die Weiterpolymerisation in der ersten Reaktionszone erfolgt im allgemeinen in einem Reaktionsgefäß, das nachstehend näher beschrieben ist.

Gemäß einer weiteren bevorzugten Ausführungsform bringt man das zu polymerisierende Gemisch auf eine weitere Temperatur von 170°C bis 310°C und einem Druck von 5 bis 40 bar, beispielsweise, indem man das Gemisch kontinuierlich innerhalb weniger Minuten über einen beheizten Wärmetauscher schickt. Anschließend wird das Produkt in einer ersten Reaktionszone, die erfindungsgemäß die heterogenen Katalysatoren enthält, unter Beibehaltung der Druck- und Temperaturbedingungen anpolymerisiert. Die Polymerisation erfolgt im allgemeinen in einem Reaktionsgefäß, das neben dem Katalysatormaterial auch andere Einbauten enthalten kann, beispielsweise in einem Rohrreaktor mit Mischelementen. Es können geordnete Mischelemente (z.B. sogenannte Sulzerpackungen) oder ungeordnete Mischelemente wie Füllkörper (z.B. Raschig-Ringe, Kugeln oder Pallringe) eingesetzt werden, die erfindungsgemäß auch mit Metalloxidverbindungen beschichtet sein können. In dieser Reaktionszone findet eine exotherme Polymerisation der Reaktionsmischung statt, wobei aus den zuvor genannten Gründen die Einphasigkeit des Reaktionssystems durch entsprechende Druck- und Temperaturbedingungen sichergestellt wird. Die Verweilzeit liegt im allgemeinen im Bereich von 0,5 bis 3 Stunden, vorzugsweise 1 bis 2 Stunden.

Das unter Druck stehende Reaktionsgemisch wird anschließend adiabatisch in eine Abscheidezone entspannt. Der Druck in dieser Abscheidzone liegt in der Regel im Bereich von 0,1 mbar bis 1,5 bar, bevorzugt im Bereich von 10 bis 1300 mbar. Bei der Entspannung kommt es zu einer Flashverdampfung des noch im Polymer befindlichen Wassers unter Nutzung der zuvor in der Polymerschmelze gespeicherten Reaktions- beziehungsweise Eigenwärme. Im Gegensatz zu der herkömmlichen Verdampfung des Wassers an einer Wärmetauscherfläche können bei der Flashverdampfung, wie schon erwähnt, aus der Polymermatrix keine Ausscheidungen an Wärmetauscherflächen und sonstigen Apparatenoberflächen stattfinden. Eine Belagbildung durch organische oder anorganische Ausscheidungen wird vermieden. Zudem wird die im Prozess freigesetzte Wärme direkt zur Wasserverdampfung genutzt, was eine weitere Energie- und Kostenersparnis bewirkt. Eine Abkühlung des Reaktionsgemisches ist zudem erwünscht, da das Polykondensationsgleichgewicht mit sinkender Temperatur auf die Seite des höhermolekularen Produkts verschoben wird. Der bei der Entspannung freigesetzte Wasserdampf enthält flüchtige Bestandteile wie das Monomer Caprolactam und Oligomere. Durch Rektifikation über eine Kolonne kann der Wasserdampf aus dem System entfernt werden, und die organischen Bestandteile können in den Prozess zurückgeführt werden.

Das bei Einsatz von Caprolactam nach der Abscheidezone erhaltene Polycaprolactam besitzt im allgemeinen ein Molekulargewicht im Bereich von 3000 bis 18000 g/mol, bevorzugt 6000 bis 12000 g/mol. Die Schmelzviskosität liegt bei 1 bis 200 Pas (bei 270°C). Die Polymerschmelze wird entweder unmittelbar im Anschluss an die Abscheidezone in eine Nachreaktionszone überführt, in der ein weiterer Molekulargewichtsaufbau stattfindet, oder direkt nach üblichen Verfahren stückig gemacht. Die Nachreaktionszone kann erfindungsgemäß ebenfalls mit den genannten heterogenen Katalysatoren ausgerüstet sein, durch die nicht nur der Oligomergehalt weiter abgesenkt, sondern auch die Kondensationsrate erhöht wird.

Wenn die Wasserkonzentration in der aufkonzentrierten, mit Lactam versetzten Extraktionslösung hoch ist und eine niedrige Tempeatur in der hydraulisch betriebenen ersten Reaktionszone gewählt wird. ist die Anwendung einer zweioder mehrstufigen Flashverdampfung zweckmäßig. Auf diese Weise vermeidet man ein Absinken der Temperatur der Reaktionsmischung unter die Polymerschmelztemperatur bei der adiabatischen Verdampfung. Hierzu wird die Mischung aus Konzentrat und Lactam wie oben beschrieben aufgeheizt und in die erste, das Katalysatorgranulat enthaltende Reaktionszone geleitet, wo sie sich durch die Reaktion weiter erhitzt. Der Druck wird vorzugsweise wieder so gewählt, dass die Reaktionsmischung einphasig-flüssig vorliegt.

Das unter Druck stehende Reaktionsgemisch wird anschließend adiabatisch in eine erste Abscheidezone entspannt, wobei der Druck in dieser Abscheidezone im Bereich von 1 bis 20 bar, bevorzugt 6 bis 15 bar und besonders bevorzugt 8 bis 12 bar liegt. Dabei wird ein Teil des im Polymer befindlichen Wassers unter Nutzung der zuvor gespeicherten Reaktions- und Eigenwärme in einer Flashverdampfung entbunden. Die Verweilzeit in der ersten Abscheidezone wählt man im allgemeinen im Bereich von 5 bis 60 Minuten. vorzugsweise 20 bis 30 Minuten. Anschließend wird die unter Druck stehende Mischung über einen weiteren Wärmetauscher in einen weiteren Reaktor geführt und dabei innerhalb weniger Minuten auf Temperaturen im Bereich von 220 bis 310°C, vorzugsweise von 230 bis 290°C und besonders bevorzugt von 235 bis 260°C erhitzt. Der Druck in diesem Reaktor, der erfindungsgemäß ebenfalls heterogene Katalysatoren enthalten kann, wird wiederum vorzugsweise so eingestellt, dass die Reaktionsmischung einphasig flüssig vorliegt, er liegt in der Regel im Bereich von 1 bis 20 bar, bevorzugt 6 bis 20 bar, vorzugsweise 12 bis 18 bar. Die Reaktionsmischung wird dann in eine zweite Abscheidezone erneut adiabatisch entspannt. Der Druck in der zweiten Abscheidezone wird im Bereich von 10 bis 1300 mbar gewählt. Dieses Verfahren des erneuten Aufheizens der Reaktionsmischung mit anschließender Flashverdampfung kann bei Bedarf wiederholt werden. Die in den verschiedenen Abscheidezonen verdampfte Wassermenge und damit verbundene Temperaturabsenkung kann durch den jeweils eingestellten Druck gezielt beeinflusst werden.

Als Lactam kann man beispielsweise Caprolactam, Önanthlactam, Capryllactam und Lauryllactam sowie deren Mischungen, bevorzugt Caprolactam, einsetzen.

Als weitere Monomereinheiten kann man beispielsweise Dicarbonsäuren, wie Alkandicarbonsäuren mit 6 bis 12 Kohlenstoffatomen, insbesondere 6 bis 10 Kohlenstoffatomen, wie Adipinsäure, Pimelinsäure, Korksäure, Azelainsäure oder Sebazinsäure sowie Terephthalsäure und Isophthalsäure, Diamine, wie C₄-C₁₂-Alkylendiamine, insbesondere mit 4 bis 8 Kohlenstoffatomen, wie Hexamethylendiamin, Tetramethylendiamin oder Octamethylendiamin, ferner m-Xylylendiamin, Bis-(4-aminophenyl)methan, Bis-(aminophenyl)propan-2,2 oder Bis-((4-aminocyclohexyl)methan, sowie Mischungen von Dicarbonsäuren und Diaminen, vorteilhaft im äquivalenten Verhältnis, wie Hexamethylendiammoniumadipat, Hexamethylendiammoniumterephthalat, in Mengen im Bereich von 0 bis 60, vorzugsweise von 10 bis 50 Gew.-%, bezogen auf die Gesamtmenge an Monomeren, einsetzen. Besondere technische Bedeutung haben Polycaprolactam und Polyamide, die aus Caprolactam, Hexamethylendiamin sowie Adipinsäure, Isophthalsäure und/oder Terephthalsäure aufgebaut sind, erlangt.

In einer bevorzugten Ausführungsform setzt man Caprolactam und Hexamethylendiammoniumadipat ("AH-Salz") ein, wobei man das AH-Salz als wässrige Lösung verwendet. Üblicherweise wählt man das Molverhältnis von Caprolactam zu AH-Salz im Bereich von 99,95:0,05 bis 80:20, bevorzugt von 95:5 bis 85:15.

Als übliche Zusatz- und Füllstoffe kann man Pigmente, wie Titandioxid, Siliciumdioxid oder Talk, Kettenregler, wie aliphatische und aromatische Carbonund Dicarbonsäuren, wie Propionsäure oder Terephthalsäure. Stabilisatoren, wie Kupfer(I)halogenide und Alkalimetallhalogenide, Nukleierungsmittel, wie Magnesiumsilikat oder Bornitrid, Homogen-Katalysatoren, wie phosphorige Säure, sowie Antioxidantien in Mengen im Bereich von 0 bis 5 Gew.-%. bevorzugt von 0,05 bis 1 Gew.-%, bezogen auf die Gesamtmenge an Monomeren, einsetzen. Die Additive setzt man in der Regel vor dem Granulieren und vor, während oder nach, bevorzugt nach der Polymerisation zu. Besonders bevorzugt werden die Additive dem Reaktionsgemisch erst nach Durchlaufen der Reaktionszonen, die die heterogenen Katalysatoren enthalten, zugesetzt.

Das erfindungsgemäß erhaltene Polymer kann dann nach üblichen Verfahren weiter verarbeitet werden, beispielsweise kann es nach üblichen Methoden stückig gemacht werden, indem man es in Form von Schmelzprofilen austrägt, anschließend durch ein Wasserbad leitet und hierbei abkühlt und dann granuliert. Das Granulat kann man dann nach an sich bekannten Methoden extrahieren und anschließend oder gleichzeitig zu hochmolekularem Polylactam umsetzen. Die Extraktion kann beispielsweise mit Wasser oder wässriger Caprolactamlösung erfolgen. Eine weitere Möglichkeit ist die Gasphasenextraktion, wie sie beispielsweise in EP-A-0 284 968 beschrieben ist. Die gewünschte Viskositätszahl des Endproduktes liegt in der Regel im Bereich von 120 bis 350 ml/g. Sie kann in an sich bekannter Weise eingestellt werden.

Die folgenden Beispiele veranschaulichen das erfindungsgemäße Verfahren. Soweit nicht anders angegeben, beziehen sich im Rahmen der vorliegenden Anmeldung alle Mengen- beziehungsweise Prozentangaben auf das Gewicht.

### Beispiele

Unextrahiertes Polyamid 6 -Granulat wird im Gegenstrom mit heißem Wasser extrahiert. Die resultierende 10%ige Extraktlösung wird in einer einstufigen Eindampfanlage bei einer Temperatur von 108°C auf einen Gehalt an organischen und anorganischen Extraktbestandteilen von 80 % aufkonzentriert. Der wasserfreie Extraktanteil der Lösung enthält 79,1 % Caprolactam-Monomer, 5,7 % Caprolactam-Dimer und 3,8 % Caprolactam-Trimer.

Die heiße aufkonzentrierte 80%ige Extraktwasserkonzentrat-Lösung wird dann in einen beheizten Mischbehälter gepumpt und dort mit Frischlactam vermischt. Die erhaltene Eduktmischung enthält 2,0 % Wasser und wird kontinuierlich in der nachstehend beschriebenen Miniplant-Apparatur polymerisiert.

Hierzu wird die Caprolactam/Extraktwasserkonzentrat-Mischung über eine Pumpe mit einem Durchsatz von 0,5 kg/h einem beheizten Wärmetauscher zugeführt und innerhalb von ca. 10 Minuten auf die gewünschte Temperatur aufgeheizt. Auf der Druckseite der Eintragspumpe wird ein Druck von ca. 10 bar eingestellt, um die Einphasigkeit des Reaktionssystems sicherzustellen. Die aufgeheizte Reaktionsmischung wird anschließend durch ein beheiztes, zylindrisches Rohr, dem sogenannten Vorreaktor mit einem Innendurchmesser von 12 mm und einer Länge von 1000 mm, gepumpt. Das Rohr ist mit Katalysatorgranulat, hergestellt aus Titandioxid von Finnti, Typ S150, mit einem Durchmesser von 4 mm und einer Länge zwischen 5 und 20 mm gefüllt. Das Titandioxid liegt in der Anatas-Modifikation vor und wird mit Hilfe von Sieben im Vorreaktor fixiert beziehungsweise vom austretenden Produktstrom getrennt. Die Verweilzeit im Rohr beträgt 1,2 Stunden. Das unter dem Druck von ca. 10 bar stehende Reaktionsgemisch wird am Rohrende über ein Regelventil kontinuierlich in ein beheiztes zylindrisches Abscheidegefäß auf einen Absolutdruck von 2,5 bar entspannt. Das Reaktionsgemisch wird dabei zweiphasig, so dass das enthaltene Wasser verdampfen kann. Die Temperatur der Polymerschmelze sinkt auf 245°C ab. Nach einer Verweilzeit von 3 Stunden im Abscheidegefäß, das gleichzeitig als Nachreaktionszone dient, wird das Polymer kontinuierlich mit einer Schmelzepumpe aus dem Sumpf des Nachreaktors über eine Düse in ein Wasserbad in Form von Schmelzprofilen ausgetragen, im Wasserbad verfestigt, granuliert und mit heißem Wasser extrahiert.

Zur Extraktion werden 100 Gew.-Teile Polyamid 6 mit 400 Gew.-Teilen vollentsalztem Wasser von 100°C für eine Dauer von 32 Stunden unter Rückfluß gerührt beziehungsweise extrahiert und nach Entfernen des Wassers milde, das heißt ohne die Gefahr einer Nachkondensation, bei einer Temperatur von 100°C für eine Zeitdauer von 20 Stunden im Vakuum getrocknet. Die sogenannte relative Viskosität (RV) des extrahierten Polyamids wird in 1,0 Gew.-%iger Lösung in 96%iger Schwefelsäure bei 25°C mittels Viskosimeter nach Ubbelohde bestimmt.
Der Dimergehalt im Polymer wurde mittels HPLC-Analyse des Extraktes bestimmt.

### Vergleichsbeispiele:

In den Vergleichsbeispielen wird das Titandioxidgranulat im zylindrischen Reaktor durch Raschig-Ringe mit einem Durchmesser von 6 mm ersetzt und das Reaktionsgemisch analog zur obigen Beschreibung polymerisiert.

Die Extrakt- und Dimergehalte der hergestellten Produkte aus den Beispielen und Vergleichsbeispielen sowie die relativen Viskositäten der extrahierten Proben sind zusammen mit den korrespondierenden Vorreaktortemperaturen tabellarisch in den Tabellen 1, 2 und 3 dargestellt.

Die Ergebnisse aus Tabelle 1 zeigen, dass die erfindungsgemäß in Gegenwart des Katalysators hergestellten Produkte bei allen Vorreaktortemperaturen und insbesondere bei Temperaturen von weniger als 230°C deutlich höhere Viskositäten aufweisen als die Vergleichsbeispiel-Polymere.

Wie die Ergebnisse aus Tabelle 2 zeigen, steigt unterhalb einer Vorreaktortemperatur von 230°C der Extraktgehalt der Polymere, die nicht katalytisch umgesetzt wurden, sehr stark an und liegt deutlich über den Extraktgehalten der erfindungsgemäß hergestellten Polyamide. Hohe Extraktwerte bedeuten, dass der Monomerumsatz unzureichend ist, der Extraktionsaufwand ansteigt und die Herstellung des Polyamids vergleichsweise unwirtschaftlich ist.

Somit gelingt bei niedrigen Temperturen eine im Vergleich zum Stand der Technik kostengünstige Herstellung von Polyamid nur dann, wenn Caprolactam erfindungsgemäß in Gegenwart des Katalysators umgesetzt wird. Wie die Ergebnisse aus Tabelle 3 zeigen, ist bei tiefen Reaktionstemperaturen im Vorreaktor unterhalb von 230°C der Dimergehalt deutlich kleiner als bei Temperaturen gleich oder größer 240°C.

**Tabelle 1 -**

| Viskositäten der erfindungsgemäß in Gegenwart des Titandioxid-Katalysators hergestellten Polyamide. | | |
|---|---|---|
| | **Relative Viskosität** | |
| Vorreaktortemp. [°C] | Beispiele | Vergleichsbeisp. |
| 190 | 1,97 | 1,71 |
| 200 | 1,97 | 1,78 |
| 210 | 2,01 | 1,84 |
| 220 | 2,02 | 1,91 |
| 230 | 2,00 | 1.99 |
| 240 | 2,06 | 2,03 |

**Tabelle 2 -**

| Extraktgehalte der erfindungsgemäß in Gegenwart des Titandioxid-Katalysators hergestellten Polyamide | | |
|---|---|---|
| | **Extraktgehalt [%]** | |
| Vorreaktortemp. [°C] | Beispiele | Vergleichsbeisp. |
| 190 | 11,83 | 29,33 |
| 200 | 11,47 | 23,63 |
| 210 | 11,37 | 19,83 |
| 220 | 10,83 | 14,03 |
| 230 | 10,77 | 11,20 |
| 240 | 10,40 | 10,60 |

**Tabelle 3**

| Dimergehalte der erfindungsgemäß in Gegenwart des Titandioxid-Katalysators hergestellten Polyamide | |
|---|---|
| | **Dimergehalt \|%\|** |
| Vorreaktortemperatur [°C] | Beispiele |
| 190 | 0,60 |
| 200 | 0,64 |
| 210 | 0,74 |
| 220 | 0,77 |
| 230 | 0,85 |
| 240 | 0,86 |

## Patentansprüche

1. Verfahren zur Herstellung von Polyamiden durch Umsetzung mindestens eines Lactams mit wässrigen Monomer- und Oligomerextrakten, die bei der Herstellung von Polyamiden während der Extraktion des Polymerisats mit Wasser anfallen und gegebenenfalls weiteren polyamidbildenden Monomeren, wobei der Wassergehalt des Reaktionsgemisches 0,5 bis 13 Gew.-% beträgt, **dadurch gekennzeichnet, daß** die Umsetzung in Gegenwart von Metalloxiden, Beta-Zeolithen, Schichtsilikaten oder Kieselgelen, die dotiert sein können, als Heterogenkatalysatoren durchgeführt wird, wobei die Heterogenkatalysatoren in einer Form eingesetzt werden, die die mechanische Abtrennung aus dem Reaktionsgemisch erlaubt, und im Verlauf oder nach Ende der Polymerisation aus dem Reaktionsgemisch entfernt werden.

2. Verfahren nach Anspruch 1, **dadurch gekennzeichnet, daß** die Heterogenkatalysatoren in Form von Granulaten, Strängen, Festbetten oder mit Katalysator beschichteten Füllkörpem oder Einbauten eingesetzt werden.

3. Verfahren nach Anspruch 1 oder 2, **dadurch gekennzeichnet, daß** die Metalloxid-Katalysatoren ausgewählt sind aus Zirkonoxid, Aluminiumoxid, Magnesiumoxid, Ceroxid, Lanthanoxid, Titanoxid, Beta-Zeolithen und Schichtsilikaten.

4. Verfahren nach Anspruch 3, **dadurch gekennzeichnet, daß** als Metalloxid-Katalysator Titanoxid eingesetzt wird, das zu mindestens 70 Gew.-% in der Anatasmodifikation vorliegt.

5. Verfahren nach einem der Ansprüche 1 bis 4, **dadurch gekennzeichnet, daß** die Polymerisation in mindestens 2 Stufen erfolgt, wobei in der ersten Stufe unter einem erhöhten Druck gearbeitet wird, bei dem das Reaktionsgemisch mit Ausnahme des Heterogenkatalysators einphasig-flüssig vorliegt, und in der zweiten Stufe unter einem Druck im Bereich von 0,1 mbar bis 1,5 bar nachkondensiert wird, wobei der Heterogenkatalysator in der ersten oder beiden Stufen vorliegt.

6. Verfahren nach Anspruch 5, **dadurch gekennzeichnet, daß** die Umsetzung in der ersten Stufe bei einer Temperatur im Bereich von 170°C bis 310°C und einem Druck in einem Bereich von 5 bis 40 bar durchgeführt wird.

7. Verfahren nach Anspruch 5 oder 6, **dadurch gekennzeichnet, daß** in der zweiten Stufe adiabatisch entspannt wird, wobei Wasser und gegebenenfalls Lactammonomere und-oligomere durch Flashverdampfung ausgetragen werden.

8. Verfahren nach einem der Ansprüche 1 bis 7, **dadurch gekennzeichnet, daß** als Lactam Caprolactam eingesetzt wird.

9. Verfahren nach Anspruch 8, **dadurch gekennzeichnet, daß** das Gewichtsverhältnis von zugesetztem Caprolactam zu Extraktgehalt im Bereich von 0,1 bis 1,5 gewählt wird.

10. Verfahren nach einem der Ansprüche 1 bis 9, **dadurch gekennzeichnet, daß** die wässrigen Monomer- und Oligomerextrakte bis zu einem Extraktgehalt von höchstens 85 Gew.-% eingedampft sind.

## Claims

1. A process for producing polyamides by reacting at least one lactam with aqueous monomer and oligomer extracts obtained during the extraction with water of the polymer product obtained in the production of polyamides and optionally further polyamide-forming monomers, the water content of the reaction mixture being in the range from 0.5 to 13% by weight, which comprises conducting the reaction in the presence of metal oxides, beta-zeolites, sheet-silicates or silica gels, which may be doped, as heterogeneous catalysts, the heterogeneous catalysts being used in a form which permits mechanical removal from the reaction mixture and are removed from the reaction mixture in the course of the polymerization or after it has ended.

2. A process as claimed in claim 1, wherein the heterogeneous catalysts are used in the form of pellets, extrudates, fixed beds or catalyst-coated packings or internals.

3. A process as claimed in claim 1 or 2, wherein the metal oxide catalysts are selected from the group consisting of zirconium oxide, aluminum oxide, magnesium oxide, cerium oxide, lanthanum oxide, titanium oxide, beta-zeolites and sheet-silicates.

4. A process as claimed in claim 3, wherein the metal oxide catalyst used is titanium oxide not less than 70% by weight in the anatase form.

5. A process as claimed in any of claims 1 to 4, wherein the polymerization is effected in at least 2 stages, the first stage being carried out under an elevated pressure at which the reaction mixture, with the exception of the heterogeneous catalyst, is present in the form of a single liquid phase and the second stage being carried out under a pressure in the range from 0.1 mbar to 1.5 bar for postcondensation, the heterogeneous catalyst being present in the first stage or both stages.

6. A process as claimed in claim 5, wherein the reaction in the first stage is carried out at from 170°C to 310°C and from 5 to 40 bar.

7. A process as claimed in claim 5 or 6, wherein an adiabatic decompression is carried out in the second stage to discharge water and any lactam monomer or oligomer by flash evaporation.

8. A process as claimed in any of claims 1 to 7, wherein a lactam used is caprolactam.

9. A process as claimed in claim 8, wherein the weight ratio of added caprolactam to extract content is set in the range from 0.1 to 1.5.

10. A process as claimed in any of claims 1 to 9, wherein the aqueous monomer and oligomer extracts are evaporated to an extract content of not more than 85% by weight.

## Revendications

1. Procédé de préparation de polyamides par réaction d'au moins un lactame avec des extraits aqueux de monomères et oligomères qui, lors de la préparation de polyamides, se forment pendant l'extraction du polymère avec de l'eau, et éventuellement avec d'autres monomères générateurs de polyamide, la teneur en eau du mélange réactionnel étant de 0,5 à 13% en poids, **caractérisé en ce que** la réaction est effectuée en présence d'oxydes métalliques, de zéolites bêta, de silicates lamellaires ou de gels de silice, qui peuvent être dopés, comme catalyseurs hétérogènes, les catalyseurs hétérogènes étant mis en oeuvre sous une forme qui permet l'isolement mécanique à partir du mélange réactionnel et étant éliminés du mélange réactionnel au cours de la polymérisation ou après la fin de celle-ci.

2. Procédé suivant la revendication 1, **caractérisé en ce que** les catalyseurs hétérogènes sont mis en oeuvre sous la forme de produits de granulation, d'extrudés, de lits fixes ou de corps de remplissage ou d'éléments insérés revêtus de catalyseur.

3. Procédé suivant l'une des revendications 1 et 2, **caractérisé en ce que** les catalyseurs à base d'oxyde métallique sont choisis parmi l'oxyde de zirconium, l'oxyde d'aluminium, l'oxyde de magnésium, l'oxyde de cérium, l'oxyde de lanthane, l'oxyde de titane, des zéolites bêta et des silicates lamellaires.

4. Procédé suivant la revendication 3, **caractérisé en ce que**, comme catalyseur à base d'oxyde métallique, on met en oeuvre de l'oxyde de titane qui se présente pour au moins 70% en poids sous la modification anatase.

5. Procédé suivant l'une des revendications 1 à 4, **caractérisé en ce que** la polymérisation a lieu en au moins deux étapes, en fonctionnant dans la première étape sous une pression élevée à laquelle le mélange réactionnel se présente à l'état liquide mono-phasique à l'exception du catalyseur hétérogène, et **en ce que**, dans la deuxième étape, on effectue une post-condensation sous une pression de l'ordre de 0,1 mbar à 1,5 bar, le catalyseur hétérogène étant présent dans la première étape ou dans les deux.

6. Procédé suivant la revendication 5, **caractérisé en ce que** la réaction est, dans la première étape, effectuée à une température de l'ordre de 170°C à 310°C et sous une pression de l'ordre de 5 à 40 bars.

7. Procédé suivant l'une des revendications 5 et 6, **caractérisé en ce que**, dans la deuxième étape, on effectue une détente adiabatique, l'eau et éventuellement des monomères et oligomères de lactame étant évacués par distillation flash.

8. Procédé suivant l'une des revendications 1 à 7, **caractérisé en ce que**, comme lactame, on met en oeuvre du caprolactame.

9. Procédé suivant la revendication 8, **caractérisé en ce que** le rapport pondéral entre le caprolactame ajouté et la teneur en extrait est choisi dans la gamme de 0,1 à 1,5.

10. Procédé suivant l'une des revendications 1 à 9, **caractérisé en ce que** les extraits aqueux de monomère et d'oligomère sont évaporés jusqu'à une teneur en extrait d'au maximum 85% en poids.
